# EUROPEAN PATENT APPLICATION

(11) **EP 3 415 837 A1**
(43) Date of publication of application: **19.12.2018**
(21) Application number: 18155172.2
(22) Date of filing: 05.02.2018
(51) Int. Cl.: F24S 30/425, F24S 50/20

(54) **SUSPENDED SOLAR GENERATOR APPARATUS WITH SUN TRACKING FUNCTION**

(30) Priority: 14.06.2017 TW 106119742
(71) Applicant: BIG SUN Energy Technology Incorporation, Hsinchu County 303 (TW); Luo, Chia Ching, Hsinchu County 303 (TW)
(72) Inventor: LUO, Chia Ching, 303 Hsinchu County (TW)
(74) Representative: Ter Meer Steinmeister & Partner

(57) **Abstract**

A suspended solar generator apparatus with a sun tracking function is mounted on a fixed structure and includes: a solar generator module converting light energy into electrical energy; multiple support structures disposed on a top portion of the solar generator module and disposed around a middle point of the top portion of the solar generator module; multiple suspension cables respectively having multiple middle portions supported by the support structures, and a first end and a second end of each of the suspension cables connected to a peripheral portion of the solar generator module, so that the suspension cables provide multiple pulling forces on the peripheral portion to resist a bending moment on the solar generator module; a middle column structure, which is pivotally connected to a middle portion of a bottom portion of the solar generator module and not aligned with each of the support structures; and a driving mechanism driving the solar generator module to rotate relatively to the middle column structure.

## Description

### BACKGROUND OF THE INVENTION

### Field of the Invention

The invention relates to a solar generator apparatus, and more particularly to a suspended solar generator apparatus with a sun tracking function using suspension cables to strengthen the structure of the suspended solar generator apparatus.

### Description of the Related Art

The solar energy generation is the environment protective power generation that can convert the sun's light energy into electrical energy. In order to reduce the deterioration of the greenhouse effect, the solar energy generation is the power generation greatly promoted by various governments.

The solar cell module of the conventional stationary solar generator apparatus is fixed onto a fixed frame, and four corners of the frame are fixed onto the building or the ground, so that the sun tracking function can not be provided. The solar cell module of the conventional solar generator apparatus with the sun tracking function is fixed onto a detachable frame, and the four corners of the frame are supported by support columns. Changing heights of the support columns can achieve the sun tracking effect. The frame can support the combination of solar cell modules with the larger areas, but needs the complicated control method, and the sun tracking effect is not satisfactory. For the detachable and fixed frames, when the area of the solar generator apparatus increases, the density of traverse beams used must be increased to strengthen the structure and to avoid the deformation in the middle area, so that the weight of the solar generator apparatus is increased, and the installation cost is increased.

Thus, how to provide a solar generator apparatus having a light weight, a strong structure and a large area is actually the problem to be solved in this application.

### BRIEF SUMMARY OF THE INVENTION

An objective of the invention is to provide a suspended solar generator apparatus with a sun tracking function using suspension cables to strengthen the structure, which is applicable to the solar energy generation with the sun tracking function.

The object is solved by the features of the independent claims. Preferred embodiments are given in the dependent claims.

To achieve the above-identified object, the invention provides a suspended solar generator apparatus with a sun tracking function. The suspended solar generator apparatus is mounted on a fixed structure and includes: a solar generator module converting light energy into electrical energy; multiple support structures disposed on a top portion of the solar generator module and disposed around a middle point of the top portion of the solar generator module; multiple suspension cables respectively having multiple middle portions supported by the support structures, wherein a first end and a second end of each of the suspension cables are connected to a peripheral portion of the solar generator module, so that the suspension cables provide multiple pulling forces on the peripheral portion to resist a bending moment on the solar generator module; a middle column structure, wherein a first end of the middle column structure is mounted on the fixed structure, a second end of the middle column structure is pivotally connected to a middle portion of a bottom portion of the solar generator module to rotatably support the solar generator module, and the middle portion is disposed under the middle point, so that each of the support structures is not aligned with the middle column structure; and a driving mechanism, which is connected to the middle column structure and the solar generator module and drives the solar generator module to rotate relatively to the middle column structure.

In some embodiments, an included angle between one of the suspension cables and the top portion of the solar generator module ranges between 2 degrees and 12 degrees.

In some embodiments, the solar generator module comprises: a cross shaft comprising a first shaft and a second shaft pivotally connected together, wherein the first shaft is pivotally connected to the middle column structure; a cross-shaft seat comprising a first column and a second column facing each other,

Preferably, the second shaft is pivotally connected to the first column and the second column.

In some embodiments, the solar generator module comprises: a frame structure, which comprises multiple connected beams, and is mounted on the first column and the second column.

In some embodiments, the solar generator module comprises multiple solar cell modules mounted on the frame structure.

In some embodiments, the support structure is disposed on the frame structure and/or disposed on multiple edge portions of the solar cell modules.

In some embodiments, the solar generator module comprises multiple ones or all of the suspension cables are disposed directly above multiple ones of the beams of the frame structure.

In some embodiments, the solar generator module comprises two of the suspension cables disposed directly above two diagonals of the solar generator module, and the other ones of the suspension cables are disposed directly above multiple ones of the beams of the frame structure.

In some embodiments, one of the support structures comprises: a cruciform bottom portion mounted on adjacent corners of four adjacent solar cell modules of the solar generator module without shielding multiple solar cells of the solar cell modules; and a support column mounted on the cruciform bottom portion.

In some embodiments, the first end and the second end of one of the suspension cables are connected to a first corner portion and a third corner portion of the solar generator module, the first end and the second end of the other one of the suspension cables are connected to a second corner portion and a fourth corner portion of the solar generator module, and a connection line between the first corner portion and the third corner portion is a diagonal of the solar generator module.

In some embodiments, the driving mechanism comprise a first winding device and a second winding device disposed on or in the middle column structure; a first cable having a first end connected to the first corner portion and a second end connected to the first winding device, and the first cable may be wound around the first winding device; a second cable having a first end connected to the second corner portion and a second end connected to the second winding device, wherein the second cable may be wound around the second winding device; a third cable having a first end connected to the third corner portion and a second end connected to the first winding device, wherein the third cable may be wound around the first winding device; a fourth cable having a first end connected to the fourth corner portion and a second end connected to the second winding device, wherein the fourth cable may be wound around the second winding device, wherein an orientation angle of the solar generator module is adjusted by rotating one or both of the first winding device and the second winding device; and first to fourth elastic anchors elastically mounted on the fixed structure, and respectively corresponding to the first to fourth corner portions, wherein the first to fourth cables respectively pass through the first to fourth elastic anchors to form two W-shaped structures.

With the above-mentioned aspect, the structure of the solar generator module can be strengthened using the lightweight suspension cables with the small volumes and the low costs, so that the structure cannot be easily bent by the strong wind, and is quite applicable to the solar generator apparatus with the sun tracking function.

Further scope of the applicability of the invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE SEVERAL VIEWS OF THE DRAWINGS

FIG. 1 is a schematic front view showing a suspended solar generator apparatus with a sun tracking function according to a first embodiment of the invention.
FIG. 2 is a top view showing a cross shaft of FIG. 1.
FIG. 3 is a top view showing the cross shaft, a frame structure and a middle column structure of FIG. 1.
FIG. 4 is a top view showing the suspended solar generator apparatus with the sun tracking function of FIG. 1.
FIGS. 5 and 6 are cross-sectional views showing two examples of the fixing aspect of the support structure.
FIGS. 7 and 8 are top views showing other two examples of the fixing aspect of the support structure.
FIG. 9 is a schematic front view showing a suspended solar generator apparatus with a sun tracking function according to a second embodiment of the invention.
FIG. 10 is a pictorial view showing the suspended solar generator apparatus with the sun tracking function of FIG. 9.

### DETAILED DESCRIPTION OF THE INVENTION

The invention will be apparent from the following detailed description, which proceeds with reference to the accompanying drawings, wherein the same references relate to the same elements.

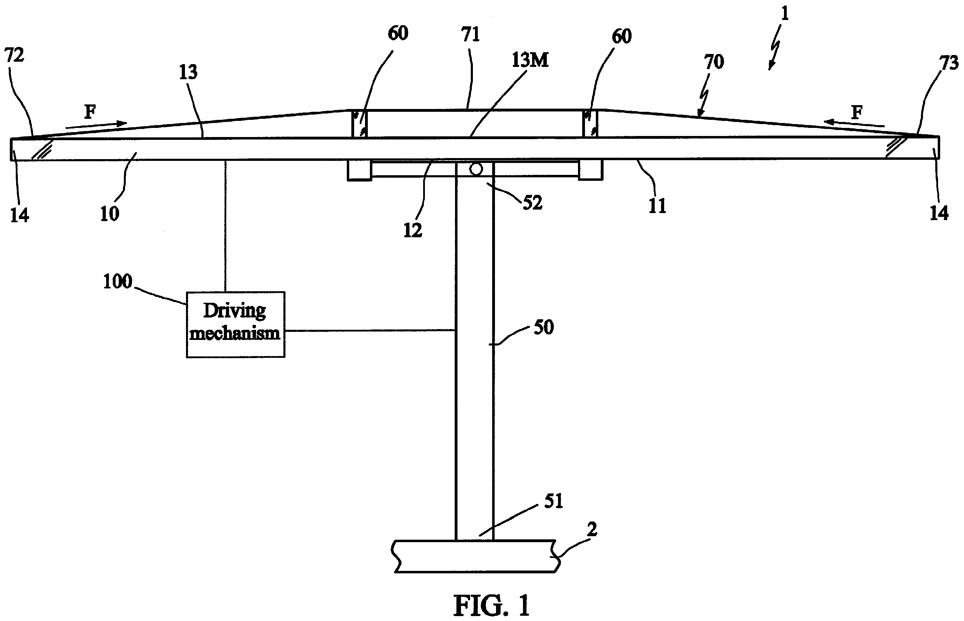

FIG. 1 is a schematic front view showing a suspended solar generator apparatus 1 with a sun tracking function according to a first embodiment of the invention. As shown in FIG. 1, the suspended solar generator apparatus 1 with the sun tracking function of this embodiment is mounted on a fixed structure 2. The fixed structure 2 is, for example, a building or the ground. The suspended solar generator apparatus 1 with the sun tracking function includes a solar generator module 10, multiple support structures 60, multiple suspension cables 70, a middle column structure 50 and a driving mechanism 100.

The solar generator module 10 converts light energy into electrical energy and may be composed of multiple solar cell modules, wherein each solar cell module maybe composed of multiple solar cells connected in series and/or in parallel. Four corners of the solar generator module 10 are not fixed to the fixed structure 2, so that the peripheral portion of the solar generator module 10 is suspended and the suspension cables 70 are required.

The support structures 60 are disposed on a top portion 13 of the solar generator module 10, and disposed around a middle point 13M of the top portion 13 of the solar generator module 10. In this example, the support structures 60 are not disposed at the middle point 13M.

Multiple middle portions 71 of the suspension cables 70 are supported (upwardly supported in this embodiment) by the support structures 60. A first end 72 and a second end 73 of each of the suspension cables 70 are connected to a peripheral portion 14 of the solar generator module 10, so that the suspension cables 70 provide multiple pulling forces F on the peripheral portion 14 to resist a bending moment on the solar generator module 10. Thus, it is possible to increase the top-view area of the solar generator module 10 without reducing the structural strength and without affecting the power generation efficiency per unit area.

In this embodiment, an included angle between one of the suspension cables 70 and the top portion 13 of the solar generator module 10 ranges between 2 and 12 degrees, and preferably ranges between 4 and 8 degrees. In one example, when the horizontal dimension of the solar generator module 10 is 4 meters, the heights of the support structures 60 range between 10 cm and 15 cm. The suspension cables 70 are, for example, metallic cables, ropes and the like. In one example, the suspension cable has the light-permeable property without shielding the light ray irradiated to the solar generator module 10. In another example, the suspension cable has the light gathering property for gathering the light ray to the solar generator module 10 to improve the power generation efficiency.

A first end 51 of the middle column structure 50 is mounted on the fixed structure 2, a second end 52 of the middle column structure 50 is pivotally connected to a middle portion 12 of a bottom portion 11 of the solar generator module 10 to rotatably support the solar generator module 10, and the middle portion 12 is disposed under the middle point 13M, so that each of the support structures 60 is not aligned with the middle column structure 50. The benefit of misalignment is that it is possible to disperse the downward pressure on the multiple support structures 60 and provide a stable effect to avoid the stress concentration and the adverse effects caused thereby. The driving mechanism 100 is connected to the middle column structure 50 and the solar generator module 10, and drives the solar generator module 10 to rotate relatively to the middle column structure 50. The driving mechanism 100 may be implemented by using a motor in conjunction with, for example but without limitation to, a cable, a link, a gear, a rack, a sprocket, a chain and the like.

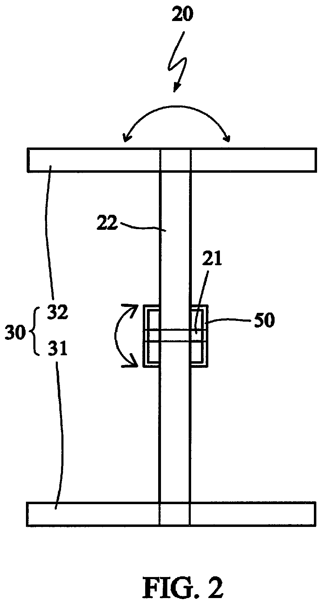

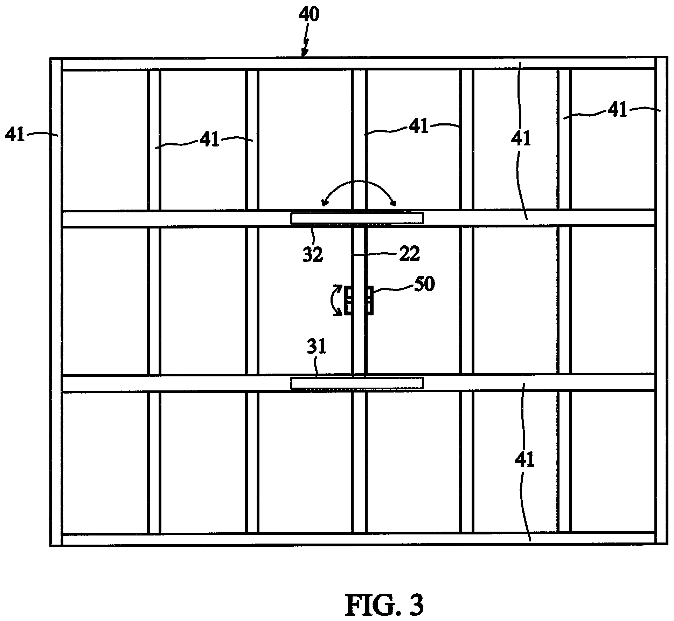

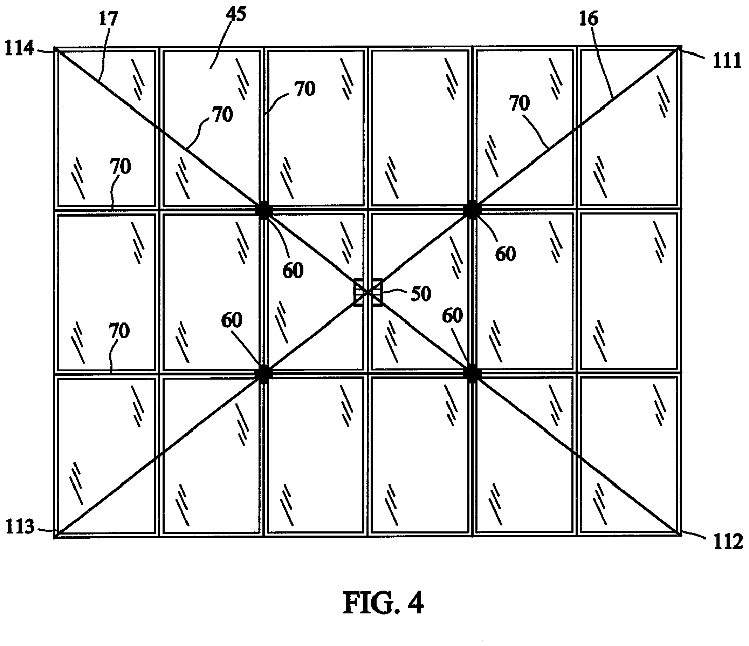

FIG. 2 is a top view showing a cross shaft of FIG. 1. FIG. 3 is a top view showing the cross shaft, a frame structure and a middle column structure of FIG. 1. FIG. 4 is a top view showing the suspended solar generator apparatus with the sun tracking function of FIG. 1. Referring to FIGS. 1 to 4, the solar generator module 10 includes a cross shaft 20, a cross-shaft seat 30, a frame structure 40 and multiple solar cell modules 45.

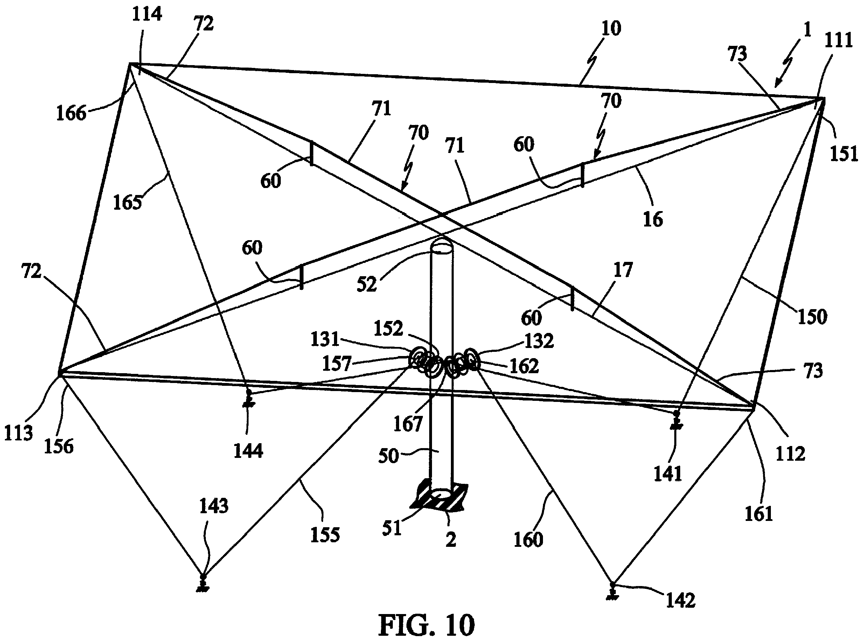

The cross shaft 20 includes a first shaft 21 and a second shaft 22 pivotally connected together, and the first shaft 21 is pivotally connected to the middle column structure 50. The cross-shaft seat 30 includes a first column 31 and a second column 32 facing each other, and the second shaft 22 is pivotally connected to the first column 31 and the second column 32. The frame structure 40 includes multiple beams 41 connected together, and is mounted on the first column 31 and the second column 32. The solar cell modules 45 are mounted on the frame structure 40. It is worth noting that the cross shaft 20 and the cross-shaft seat 30 may also be replaced by a universal joint or a ball-shaped joint (see FIG. 10, for example).

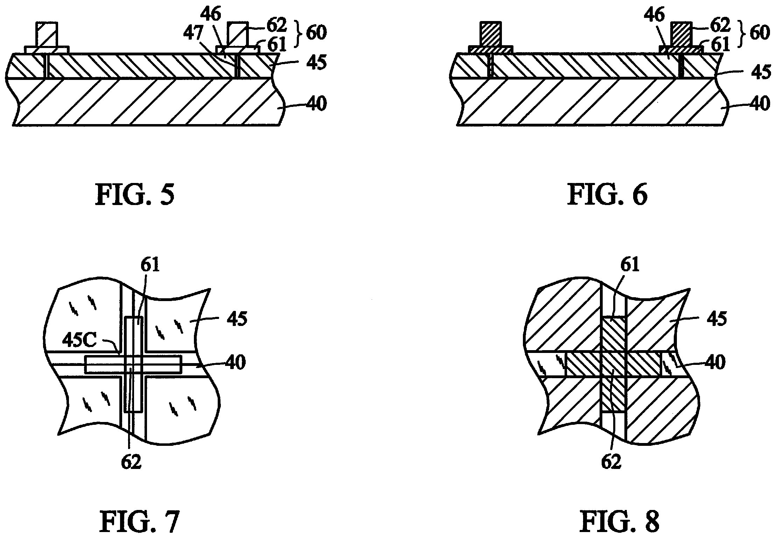

FIGS. 5 and 6 are cross-sectional views showing two examples of the fixing aspect of the support structure. Each or one of the support structures 60 has a cruciform bottom portion 61 and a support column 62, and the support column 62 is disposed on the cruciform bottom portion 61. The cruciform bottom portion 61 and the support column 62 may be detachable elements or a one-piece molded element. In FIG. 5, the support structures 60 are disposed on multiple edge portions 46 of the solar cell modules 45, and a gap 47 is formed between the adjacent edge portions 46. In FIG. 6, the support structures 60 are disposed on the frame structure 40 and the multiple edge portions 46 of the solar cell modules 45. That is, one portion of the cruciform bottom portion 61 passes through the gap between the solar cell modules 45 and is fixed onto the frame structure 40, and the other portion of the cruciform bottom portion 61 is directly fixed onto the edge portions 46. It is worth noting that the support structures 60 may also be disposed on the frame structure 40 only, and may pass through gaps or slots between the adjacent edge portions 46.

FIGS. 7 and 8 are top views showing another two examples of the fixing aspect of the support structure. As shown in FIG. 7, the cruciform bottom portion 61 is mounted among adjacent corners 45C of the four adjacent solar cell modules 45 of the solar generator module 10 without shielding the solar cells of the solar cell modules 45 (see FIG. 4) so that the area of receiving the sun light is not reduced.

The top views of FIGS. 3 and 4 can be directly superimposed. As shown in FIGS. 3 and 4, two inclined suspension cables 70 of the suspension cables 70 are disposed directly above the two diagonals 16 and 17 of the solar generator module 10 (the suspension cables 70 and the diagonals 16 and 17 are in the superimposed state in the top view of FIG. 5), and the other suspension cables 70 (horizontal and vertical suspension cables 70) are disposed directly above some of the beams 41 of the frame structure 40. It is worth noting that the number of the suspension cables 70 may be appropriately deleted. For example, two inclined suspension cables 70 may be removed. In this case, all of the suspension cables 70 are disposed directly above some of the beams 41 of the frame structure 40. In other modifications, some of the suspension cables 70 are disposed directly above some of the beams 41 of the frame structure 40 or disposed directly above all of the beams 41 of the frame structure 40. Alternatively, the horizontal and vertical suspension cables 70 may be removed.

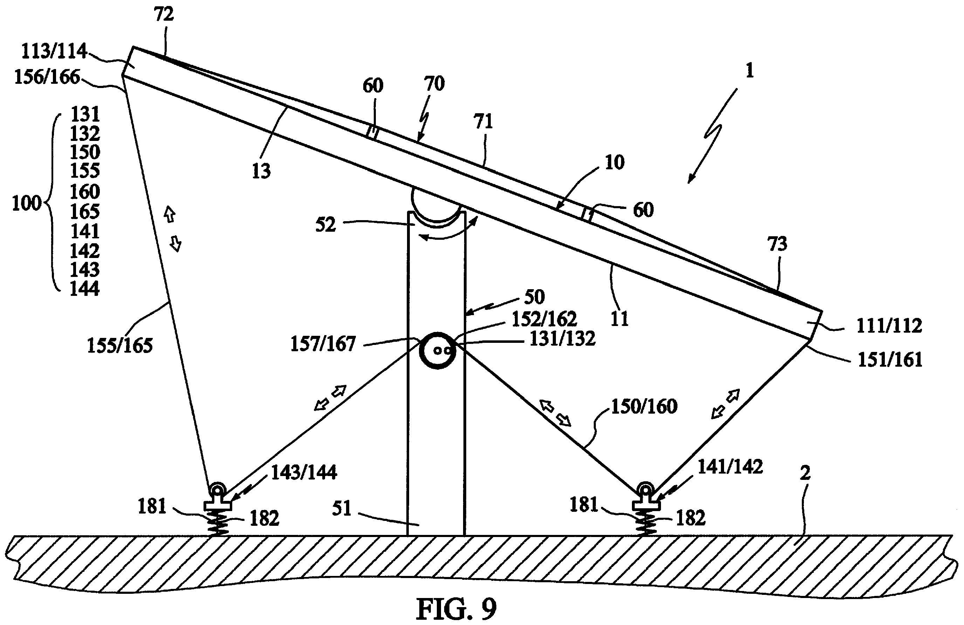

FIG. 9 is a schematic front view showing a suspended solar generator apparatus with the sun tracking function according to a second embodiment of the invention. FIG. 10 is a pictorial view showing the suspended solar generator apparatus with the sun tracking function according to FIG. 9. This embodiment is similar to the first embodiment except for the difference that there are only two suspension cables 70, and the solar generator apparatus further includes many implementation details. For example, the first end 72 and the second end 73 of one of the suspension cables 70 are connected to a first corner portion 111 and a third corner portion 113 of the solar generator module 10, the first end 72 and the second end 73 of the other one of the suspension cables 70 are connected to a second corner portion 112 and a fourth corner portion 114 of the solar generator module 10, a connection line between the first corner portion 111 and the third corner portion 113 is a diagonal 16 of the solar generator module 10, and a connection line between the second corner portion 112 and the fourth corner portion 114 is another diagonal 17 of the solar generator module 10.

Furthermore, the driving mechanism 100 of the suspended solar generator apparatus 1 with the sun tracking function includes a first winding device 131, a second winding device 132, a first cable 150, a second cable 155, a third cable 160, a fourth cable 165 and first to fourth elastic anchors 141 to 144. The first winding device 131 and the second winding device 132 are disposed on or in the middle column structure 50. The first cable 150 has a first end 151 connected to the first corner portion 111 and a second end 152 connected to the first winding device 131. The second cable 155 has a first end 156 connected to the second corner portion 112 and a second end 157 connected to the second winding device 132. The third cable 160 has a first end 161 connected to the third corner portion 113 and a second end 162 connected to the first winding device 131. The fourth cable 165 has a first end 166 connected to the fourth corner portion 114 and a second end 167 connected to the second winding device 132. The first cable 150 and the third cable 160 may be wound around the first winding device 131. The second cable 155 and the fourth cable 165 may be wound around the second winding device 132. By rotating one or both of the first winding device 131 and the second winding device 132, the orientation angle of the solar generator module 10 is adjusted to achieve the sun tracking effect.

The first to fourth elastic anchors 141 to 144 are elastically mounted on the fixed structure 2, for example, through springs 182 and limit elements 181 preventing the springs 182 from exceeding the elastic limit, and respectively correspond to the first to fourth corner portions 111 to 114, and the first to fourth cables 150, 155, 160 and 165 respectively pass through the first to fourth elastic anchors 141 to 144, to form two W-shaped structures.

Consequently, when the light receiving surface (top portion 13) of the top portion of the solar generator module 10 is parallel to the ground, the first cable 150 and the second cable 155 are orthogonally projected onto the light receiving surface, they substantially coinciding with the diagonal 16, and the third cable 160 and the fourth cable 165 are orthogonally projected onto the light receiving surface, they substantially coinciding with the diagonal 17. Because the above-mentioned cables (such as ropes or metallic cables) are wound around the first winding device 131 and the second winding device 132 to adjust the orientation angle of the solar generator module 10, downward pulling forces are exerted onto the first to fourth corner portions 111 to 114 to bend and deform the solar generator module 10. Thus, the suspension cables 70 exert upward pulling forces onto the first to fourth corner portions 111 to 114 to effectively resist the bending and deformation, strengthen the structure of the solar generator module 10 and resist strong winds (the first to third embodiments have this function), wherein when the size of the solar generator module 10 gets larger, the benefits get more obvious. It is worth noting that the intersection of two suspension cables 70 may be in a freely movable state, restrictive movable state or fixed state.

With the above-mentioned embodiment, the structure of the solar generator module can be strengthened using lightweight, small volume and low cost suspension cables, so that the structure cannot be easily bent by the strong wind, and is quite applicable to the solar generator apparatus with the sun tracking function.

While the invention has been described by way of examples and in terms of preferred embodiments, it is to be understood that the invention is not limited thereto. To the contrary, it is intended to cover various modifications. Therefore, the scope of the appended claims should be accorded the broadest interpretation so as to encompass all such modifications.

## Claims

1. A suspended solar generator apparatus (1) mounted on a fixed structure (2), the suspended solar generator apparatus (1) comprising:
a solar generator module (10) converting light energy into electrical energy;
multiple support structures (60) disposed on a top portion (13) of the solar generator module (10), and disposed around a middle point (13M) of the top portion (13) of the solar generator module (10);
multiple suspension cables (70) respectively having multiple middle portions (71) supported by the support structures (60), wherein a first end (72) and a second end (73) of each of the suspension cables (70) are connected to a peripheral portion (14) of the solar generator module (10), so that the suspension cables (70) exert multiple pulling forces (F) on the peripheral portion (14) to resist a bending moment of the solar generator module (10);
a middle column structure (50) having a first end (51) mounted on the fixed structure (2), and a second end (52) pivotally connected to a middle portion (12) of a bottom portion (11) of the solar generator module (10) to rotatably support the solar generator module (10), wherein the middle portion (71) is disposed under the middle point (13M), so that each of the support structures (60) is not aligned with the middle column structure (50); and
a driving mechanism (100), which is connected to the middle column structure (50) and the solar generator module (10) and drives the solar generator module (10) to rotate relatively to the middle column structure (50).

2. The suspended solar generator apparatus (1) according to claim 1, wherein an included angle between one of the suspension cables (70) and the top portion (13) of the solar generator module (10) ranges between 2 degrees and 12 degrees.

3. The suspended solar generator apparatus (1) according to claim 1 or 2, wherein the solar generator module (10) comprises:
a cross shaft (20) comprising a first shaft (21) and a second shaft (22) pivotally connected together, wherein the first shaft (21) is pivotally connected to the middle column structure (50);
a cross-shaft seat (30) comprising a first column (31) and a second column (32) facing each other, wherein the second shaft (22) is pivotally connected to the first column (31) and the second column (32);
a frame structure (40), which comprises multiple connected beams (41), and is mounted on the first column (31) and the second column (32); and
multiple solar cell modules (45) mounted on the frame structure (40).

4. The suspended solar generator apparatus (1) according to claim 3, wherein the support structure (60) is disposed on the frame structure (40) and/or disposed on multiple edge portions (46) of the solar cell modules (45).

5. The suspended solar generator apparatus (1) according to claim 3 or 4, wherein multiple ones or all of the suspension cables (70) are disposed directly above multiple ones of the beams (41) of the frame structure (40).

6. The suspended solar generator apparatus (1) according to claim 3, 4 or 5, wherein two of the suspension cables (70) are disposed directly above two diagonals (16; 17) of the solar generator module (10), and the other ones of the suspension cables (70) are disposed directly above multiple ones of the beams (41) of the frame structure (40).

7. The suspended solar generator apparatus (1) according to any one of the preceding claims, wherein one of the support structures (60) comprises:
a cruciform bottom portion (61) mounted on adjacent corners (45C) of four adjacent solar cell modules (45) of the solar generator module (10) without shielding multiple solar cells of the solar cell modules (45); and
a support column (62) mounted on the cruciform bottom portion (61).

8. The suspended solar generator apparatus (1) according to any one of the preceding claims, wherein the first end (72) and the second end (73) of one of the suspension cables (70) are connected to a first corner portion (111) and a third corner portion (113) of the solar generator module (10), the first end (72) and the second end (73) of the other one of the suspension cables (70) are connected to a second corner portion (112) and a fourth corner portion (114) of the solar generator module (10), and a connection line between the first corner portion (111) and the third corner portion (113) is a diagonal (16) of the solar generator module (10).

9. The suspended solar generator apparatus (1) according to claim 8, wherein the driving mechanism (100) comprise:
a first winding device (131) and a second winding device (132) disposed on or in the middle column structure (50);
a first cable (150) having a first end (151) connected to the first corner portion (111) and a second end (152) connected to the first winding device (131), and the first cable (150) may be wound around the first winding device (131);
a second cable (155) having a first end (156) connected to the second corner portion (112) and a second end (157) connected to the second winding device (132), wherein the second cable (155) maybe wound around the second winding device (132);
a third cable (160) having a first end (161) connected to the third corner portion (113) and a second end (162) connected to the first winding device (131), wherein the third cable (160) may be wound around the first winding device (131);
a fourth cable (165) having a first end (166) connected to the fourth corner portion (114) and a second end (167) connected to the second winding device (132), wherein the fourth cable (165) may be wound around the second winding device (132), wherein an orientation angle of the solar generator module (10) is adjusted by rotating one or both of the first winding device (131) and the second winding device (132); and
first to fourth elastic anchors (141; 142; 143; 144) elastically mounted on the fixed structure (2), and respectively corresponding to the first to fourth corner portions (111; 112; 113; 114), wherein the first to fourth cables (150; 155; 160; 165) respectively pass through the first to fourth elastic anchors (141; 142; 143; 144) to form two W-shaped structures.
